# EUROPÄISCHE PATENTSCHRIFT

(11) **EP 2 121 787 B1**
(45) Veröffentlichungstag und Bekanntmachung des Hinweises auf die Patenterteilung: **03.11.2010**
(21) Anmeldenummer: 07846986.3
(22) Anmeldetag: 05.12.2007
(51) Int. Cl.: C08G 18/08, C08G 18/42, C08G 18/12, C08G 18/70, C09D 175/04

(54) **COLÖSERFREIE, SELBSTVERNETZENDE PUR-DISPERSIONEN**
CO SOLVENT-FREE, SELF-CROSSLINKING POLYURETHANE DISPERSIONS
DISPERSIONS DE PUR AUTORÉTICULANTES SANS COSOLVANTS

(30) Priorität: 18.12.2006 DE 102006059680
(43) Veröffentlichungstag der Anmeldung: 25.11.2009
(73) Patentinhaber: Bayer MaterialScience AG, 51368 Leverkusen (DE)
(72) Erfinder: DÖRR, Sebastian, 40597 Düsseldorf (DE); MÜLLER, Heino, 51375 Leverkusen (DE); MÜLLER, Helmut, 51373 Leverkusen (DE); HEBESTREIT, Tanja, 51688 Wipperfürth (DE)
(86) Internationale Anmeldenummer: PCT/EP2007/010538
(87) Internationale Veröffentlichungsnummer: WO 2008/074398

(56) Entgegenhaltungen:
- EP-B1- 1 311 571
- WO-A-2007/000262
- US-A- 4 098 933

## Beschreibung

Die vorliegende Erfindung betrifft ein Verfahren zur Herstellung selbstvernetzender PUR-Dispersionen,

In den letzten Jahren stieg die Bedeutung wässriger Lacke und Beschichtungsmittel, aufgrund immer strengerer Emissionsrichtlinien bezüglich der bei der Lackapplikation freiwerdenden Lösemittel, stark an. Obwohl inzwischen bereits für viele Anwendungsbereiche wässrige Lacksysteme zur Verfügung stehen, enthalten diese meist aus dem Herstellprozess oftmals noch erhebliche Mengen an Colösemitteln. Insbesondere sind bislang noch keine colöserarmen aus wässriger Phase zu verarbeitende Beschichtungsmittel auf Polyurethanbasis bekannt geworden, die den hohen Anforderungen der Praxis bei der Automobilerstlackierung in ausreichendem Maß genügen.

In den letzten Jahren sind weitere Verbesserungen bei Einkomponenten(1K)-Einbrennlacke erzielt worden. Die Anmeldung EP-A 1 311 571 beschreibt selbstvernetzende Polyurethandispersionen, die aus einer physikalischen Mischung von Urethangruppen und Hydroxygruppen enthaltenden Polyolen und nicht hydrophilierten, zu mindestens 50 Äquivalentprozent mit Dimethylpyrazolderivaten blockierten Polyisocyanaten erhalten wurde. Diese physikalischen Mischungen von Polyol-Komponenten und blockierten Polyisocyanaten weisen deutliche lacktechnische Vorteile auf, unterliegen aber erheblichen Nachteilen, was deren Herstellung anbetrifft. Zum einen wird in der beschriebenen Anmeldung die blockierte PolyisocyanatKomponente in einem separaten Reaktionskessel hergestellt, was erheblichen Mehraufwand verglichen mit einem Verfahren, welches in einem Kessel durchgeführt wird, bedeutet. Zum anderen ist man durch die erhebliche Viskosität des blockierten Polyisocyanates in Reinsubstanz auf den Zusatz von Lösemitteln angewiesen, da andernfalls eine Dosierung nicht möglich ist. Aus sicherheitstechnischen Gründen können derartige Lösungen in hochflüchtigen Lösemitteln wie beispielsweise Aceton nicht gelagert oder transportiert werden, so dass ausschließlich schwerflüchtige Lösemittel für die blockierten Polyisocyanate eingesetzt werden können. Diese verbleiben zwangsläufig in der Dispersion und in den Lackformulierungen und werden erst beim Anwender freigesetzt, was in der Regel nicht erwünscht ist. Die in EP-A 1 311 571 beschriebenen selbstvernetzenden Einbrennsysteme enthalten zwischen 4,8 und 11,3 Gew.-% an Colösern bzgl. der Dispersion, dies ist zu viel für einige Anwendungsbereiche wasserbasierter Beschichtungssysteme.

Ein weiterer Nachteil des in EP-A 1 311 571 beschriebenen Verfahrens ist, dass die blockierten Polyisocyanate nicht zwangsläufig stabil in einem Lösemittel gelöst werden können. Einige Blockierungsmittel sind daher nicht einsetzbar.

Die Aufgabe der vorliegenden Erfindung besteht daher in der Bereitstellung eines Verfahrens zur Herstellung einer selbstvernetzenden, wässrigen Polyurethandispersion, die keine oder nur sehr geringe Mengen an Colöser enthält, so dass kein Ausdünsten des Colösers beim Endanwender auftreten kann.

Diese Aufgabe wird gelöst durch ein Verfahren zur Herstellung von selbstvernetzenden, wässrigen Polyurethandispersionen umfassend folgende Schritte:
I. Umsatz eines
   a1) Polyisocyanates
      mit einem Gemisch aus
   a2) mindestens eine isocyanatreaktive Gruppe enthaltendem, anionischem Hydrophilierungsmittel mit einer mittleren OH-Funktionalität von ≥ 1 und
   a3) mindestens einer Polyolkomponente mit einer mittleren OH-Funktionalität von > 1,
      wobei entweder das Gemisch aus a2) und a3) oder die Komponente a1)
      k) mindestens einen Katalysator enthält,
II. Erhalt eines OH-funktionellem und NCO-gruppenfreiem Polyurethan aus Schritt I, welches anschließend
III. a4) mit einem reaktiven Blockierungsmittel für Isocyanatgruppen vermischt wird,
IV. anschließender Umsatz dieses Gemisch aus Schritt III mit
   a5) einem oder mehreren Polyisocyanaten ausgewählt aus der Gruppe von a1), wobei diese Polyisocyanate gleich oder verschieden von a1) sind und anschließender
V. Erhalt einer physikalischen Mischung aus OH-funktionellen, NCO-gruppenfreien Polyurethan und blockiertem Polyisocyanat aus Schritt IV, bei dem anschließend entweder
VI. die Säuregruppen des OH-funktionellem Polyurethans durch Zugabe a6) eines Neutralisationsmittels ganz oder teilweise deprotoniert werden
VII. und das aus diesem Schritt VI. erhaltene Polyurethan in Wasser dispergiert wird oder Schritt VII vor Schritt VI erfolgt.

Vorteilhaft ist das erfindungsgemäße Verfahren, wenn Schritt VI vor Schritt VII erfolgt.

Vorteilhaft ist das erfindungsgemäße Verfahren, wenn Schritt VII vor Schritt VI erfolgt.

Vorteilhaft ist das erfindungsgemäße Verfahren, wenn als Blockierungsmittel gemäß Schritt III Verbindungen ausgewählt aus der Gruppe von Butanonoxim, Diisopropylamin und 3,5-Dimethylpyrazol eingesetzt werden.

Vorteilhaft ist das erfindungsgemäße Verfahren, wenn bis zu 30 Gew.-% bezogen auf das Polyurethan aus Schritt II. an einem Lösungsmittel oder Lösungsmittelgemisch ausgewählt aus der Gruppe von Aceton, Methylethylketon und Tetrahydrofuran und deren Mischungen nach Schritt II. oder Schritt III. eingesetzt werden, das anschließend nach Schritt VII destillativ entfernt wird.

In der erfindungsgemäß hesgestellten Dispersion wird das Verhältnis der resultierenden, mit a4) blockierten Isocyanatgruppen, zu den gegenüber Isocyanaten reaktionsfähigen OH-Gruppen von 0,2 bis 5,0 zu 1, bevorzugt 0,4 bis 2,0 zu 1, besonders bevorzugt 0,5 bis 1,5 zu 1 gewählt.

Die Mengen der einzelnen Komponenten sind so bemessen dass folgende Gewichtsverhältnisse der Komponenten a)1 bis a 6) resultieren:
a1): 3 bis 25, bevorzugt 6 bis 18, besonders bevorzugt 7 bis 14 Gewichtsteile;
a2): 0,3 bis 8, bevorzugt 1 bis 6, besonders bevorzugt 2 bis 5 Gewichtsteile;
a3): 40 bis 85, bevorzugt 50 bis 75, besonders bevorzugt 60 bis 70 Gewichtsteile;
a4): 1 bis 20, bevorzugt 3 bis 17, besonders bevorzugt 4 bis 10 Gewichtsteile;
a5): 3 bis 25, bevorzugt 5 bis 20, besonders bevorzugt 9 bis 17 Gewichtsteile;
a6): 0,5 bis 10, bevorzugt 1 bis 6, besonders bevorzugt 2 bis 4 Gewichtsteile;
k): 0,001 bis 2, bevorzugt 0,005 bis 0,1, besonders bevorzugt 0,01 bis 0,08 Gewichtsteile

Die angegebenen Gewichtsteile beziehen sich auf die angegebenen Komponenten, ohne den Wasseranteil oder eventuell vorhandene Lösemittel.

Die Menge des eingesetzten Neutralisationsmittels a6) wird im Allgemeinen so bemessen, dass der Neutralisationsgrad Polyurethan aus Schritt II. vorhandenen Carbonsäure- und/oder Sulfonsäuregruppen (molares Verhältnis von eingesetztem Amin zu vorhandenen Säuregruppen) mindestens 50 %, bevorzugt 80 % bis 120 %, besonders bevorzugt 95 bis 105 % beträgt. Die Neutralisation kann dabei vor, während oder nach dem Dispergier- (Schritt VII bzw. Löseschritt erfolgen. Bevorzugt ist jedoch die Neutralisation vor der Wasserzugabe (vor Schritt VII).

In der Komponente a1) können alle organischen isocyanatgruppenaufweisende Verbindungen, jedoch bevorzugt aliphatische, cycloaliphatische, aromatische oder heterocyclische Polyisocyanate einer NCO-Funktionalität ≥ 2, einzeln oder in beliebigen Mischungen untereinander verwendet werden, wobei es unerheblich ist, ob diese durch Phosgenierung oder nach phosgenfreien Verfahren hergestellt wurden.

Beispiele solcher Isocyanate sind Tetramethylendiisocyanat, Cyclohexan-1,3- und 1,4-diisocyanat, Hexamethylendiisocyanat (HDI), 1-Isocyanato-3,3,5-trimethyl-5-isocyanatomethylcyclohexan (Isophorondiisocyanat IPDI), Methylen-bis-(4-isocyanatocyclohexan), Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat sowie beliebige Gemische derartiger Isocyanate.

Ebenfalls gut geeignet sind die davon abgeleiteten Polyisocyanate mit Uretdion-, Carbodiimid-, Isocyanurat-, Iminooxadiazindion-, Biuret-, Urethan-, Allophanat-, Oxadiazintrion oder Acylhamstoff-Strukur sowie Polyisocyanatprepolymere einer mittleren NCO-Funktionalität > 1, wie sie werden durch Vorreaktion eines molaren Überschusses eines der oben genannten Polyisocyanate, mit einem organischen Material erhalten werden, das mindestens zwei isocyanatreaktive Wasserstoffatome pro Molekül, z.B. in Form von OH-Gruppen, aufweist.

Bevorzugt werden in a1) Verbindungen der vorstehend genannten Art mit einem Molekulargewicht von 140 bis 1000 g/mol eingesetzt.

Besonders bevorzugt werden in Komponente a1) Polyisocyanate oder Polyisocyanatgemische der genannten Art mit ausschließlich aliphatisch und/oder cycloaliphatisch gebundenen Isocyanatgruppen eingesetzt, insbesondere solche auf Basis von Hexamethylendiisocyanat (HDI), Isophorondiisocyanat (IPDI) und/oder 4,4'-Diisocyanatodicyclohexylmethan.

Die Polyolkomponente a2) hat bevorzugt eine mittlere OH-Funktionalität von 1 bis 6, bevorzugt von 2 bis 4 und ein zahlenmittleres Molekulargewicht von 62 bis 2500 g/mol, bevorzugt 62 bis 1000 g/mol, besonders bevorzugt 62 bis 500 g/mol und enthält eine säurefunktionelle Verbindung, die neben der Säurefunktion noch mindestens eine isocyanatreaktive OH-Gruppe aufweist.

Vorzugsweise handelt es sich bei diesen Verbindungen um mindestens eine, bevorzugt eine oder zwei Hydroxylgruppen aufweisende Carbonsäuren oder um Salze derartiger Hydroxycarbonsäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder Gemische derartiger Säuren. Bevorzugt wird als Komponente a5) Dimethylolpropionsäure und/oder Hydroxypivalinsäure verwendet.

Besonders bevorzugt enthält a2) ausschließlich solche vorstehend genannten säurefunktionelle Verbindungen, ganz besonders bevorzugt wird als a2) ausschließlich Dimethylolpropionsäure eingesetzt.

Die in a3) eingesetzte Polyolkomponente besteht aus
b1) 2- bis 6-wertigen Alkoholen mit zahlenmittleren Molekulargewichten von 62 bis 300 g/mol, bevorzugt 62 bis 182 g/mol, besonders bevorzugt 62 bis 118 g/mol,
b2) Polyolen mit einer OH-Funktionalität ≥ 2 und mit zahlenmittleren Molekulargewichten von 300 bis 5000 g/mol, bevorzugt 300 bis 3000 g/mol, besonders bevorzugt 300 bis 2000 g/mol und/oder
b3) monofunktionellen linearen Polyethern mit zahlenmittleren Molekulargewichten von 300 bis 3000 g/mol, bevorzugt 300 bis 2000 g/mol, besonders bevorzugt 300 bis 1000g/mol.

Als Polyole b1) kommen 2- bis 6-wertige Alkohole und/oder deren Gemische in Betracht, die keine Estergruppen aufweisen. Typische Beispiele sind Ethandiol-1,2, Propandiol-1,2 und -1,3, Butandiol-1,4, -1,2 oder -2,3 Hexandiol-1,6, 1,4-Dihydroxycyclohexan, Glycerin, Trimethylolethan, Trimethylolpropan, Pentaerythrit und Sorbit.

Bevorzugte Verbindungen für b1) sind 1,4- oder 1,3-Butandiol, 1,6-Hexandiol und/oder Trimethylolpropan.

Geeignete Polyole der Komponente b2) sind ausgewählt aus der Gruppe der Polyether, Polyester und/oder Polycarbonate. Bevorzugt enthält die b2) mindestens ein estergruppenenthaltendes Polyol mit einem zahlenmittleren Molekulargewicht von 350 bis 4000 g/mol, bevorzugt 350 bis 2000 g/mol, besonders bevorzugt 350 bis 1000 g/mol. Die bevorzugte mittlere OH-Funktionalität beträgt 2 bis 4 OH-Gruppen pro Molekül.

Solche estergruppenenthaltenden Polyole sind die an sich bekannten Polyesterpolyole, die aus niedermolekularen Polyolen und Dicarbonsäuren aufgebaut sind. Geeignete niedermolekularen Polyolen für diesen Zweck sind beispielsweise 1,4-Butandiol, 1,3-Butandiol, 1,6-Hexandiol, 2,2,4-Trimethyl-1,3-pentandiol, Trimethylolpropan, Pentaerythrit oder Sorbit. Geeignete Dicarbonsäuren sind beispielsweise aromatische Dicarbonsäuren wie Phthalsäure, Isophthalsäure und Terephthalsäure; cycloaliphatische Dicarbonsäuren wie Hexahydrophthalsäure, Tetrahydrophthalsäure, Endomethylentetrahydrophthalsäure und/oder deren Anhydride; und aliphatische Dicarbonsäuren, wie Bernsteinsäure, Glutarsäure, Adipinsäure, Korksäure, Azelainsäure, Sebacinsäure und/oder deren Anhydride. Bevorzugt werden aliphatische Dicarbonsäuren zum Aufbau der Esterdiole verwendet.

Bevorzugt werden in Komponente b2) als Polyesterpolyole Polycaprolactondiole mit einem zahlenmittleren Molekulargewicht von 350 bis 4000 g/mol, bevorzugt 350 bis 2000 g/mol, besonders bevorzugt 350 bis 1000 g/mol eingesetzt. Diese sind in an sich bekannter Weise aus einem Diol, Triol oder Diol/Triolgemisch der oben beispielhaft genannten Art als Starter und ε-Caprolacton erhältlich.

Bevorzugte Polycaprolactondiole werden durch Polymerisation von ε-Caprolacton unter Verwendung von 1,6-Hexandiol als Starter hergestellt.

Besonders bevorzugte Polyesterpolyole sind solche auf Basis von Adipinsäure, Phthalsäure, Isophthalsäure und Tetrahydrophthalsäure als Säurekomponente und 1,4- oder 1,3-Butandiol, 1,6-Hexandiol und/oder Trimethylolpropan als Alkoholkomponente.

In Komponente b2) können auch (Co)polyether aus Ethylenoxid, Propylenoxid und/oder Tetrahydrofuran eingesetzt werden. Bevorzugt sind Polyether mit einem zahlenmittleren Molekulargewicht von 500 bis 2000 g/mol, wie Polyethylenoxide oder Polytetrahydrofurandiole.

Ferner können in b2) auch hydroxylgruppenhaltige Polycarbonate wie Hexandiolpolycarbonat oder Polyestercarbonate enthalten sein mit einem bevorzugten zahlenmittleren Molekulargewicht von 400 bis 4000 g/mol, besonders bevorzugt 400 bis 2000 g/mol.

Geeignete monofunktionelle lineare Polyether der Komponente b3) sind z.B. (Co)polyether aus Ethylenoxid und/oder Propylenoxid. Bevorzugt sind monoalkoholgestartete Polyalkylenoxidpolyether mit einem zahlenmittleren Molekulargewicht von 350 bis 2500 g/mol mit mindestens 70 % Ethylenoxid-Einheiten. Besonders bevorzugt sind solche (Co)polymere mit mehr als 75 % Ethylenoxideinheiten und einem zahlenmittleren Molekulargewicht von 300 bis 2500 g/mol, bevorzugt 500 bis 1000 g/mol. Als Startermoleküle bei der Herstellung dieser Polyether werden bevorzugt monofunktionelle Alkohole mit 1 bis 6 Kohlenstoffatomen eingesetzt.

Die in a4) eingesetzten Blockierungsmittel sind ausgewählt an sich bekannten Blockierungsmitieln für Isocyanatgruppen, wobei die eingesetzten Blockierungsmittel eine höhere Reaktivität mit Isocyanatgruppen aufweisen müssen, als die OH-Gruppen des Polyurethanpolymers. Beispiele für geeignete Blockierungsmittel sind Oxime wie Butanonoxim, Amine wie Diisopropylamin, oder tert.-Butylbenzylamin, 3,5-Dimethylpyrazol, Triazol bzw. deren Gemische. Bevorzugt sind Butanonoxim, Diisopropylamin, 3,5-Dimethylpyrazol oder deren Gemische.

Die Reaktivität der Blockierungsmittel mit Isocyanatgruppen ist vom Fachmann leicht zu ermitteln und bezieht sich auf einen Temperaturbereich zwischen 0 und 100°C, bevorzugt zwischen 20 und 60°C. Die Reaktivität kann dabei durch dem Fachmann bekannte Katalysatoren erhöht werden, dadurch kann auch die Reaktivität des Blockierungsmittels gezielt stärker erhöht werden als die Reaktivität der Alkoholgruppen des Polyols.

Die als a5) eingesetzten Polyisocyanatkomponente kann aus denselben Bausteinen bestehen, die unter Komponente a1) aufgeführt sind. Die Komponenten a1) und a5 können dabei gleich oder verschieden sein.

Bevorzugt für a5) sind Polyisocyanatkomponenten bzw. deren Mischungen mit einer Isocyanatfunktionalität im Bereich von 2 bis 6, besonders bevorzugt von 2,5 bis 5 und ganz besonders bevorzugt von 3 bis 4,5.

Beispiel für als a6) eingesetzte Neutralisationsmittel sind Triethylamin, Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2- methyl-1-propanol, Ammoniak, Hydroxide wie Natriumhydroxid oder deren beliebige Gemische. Bevorzugte Neutralisationsmittel sind tert. Amine wie Triethylamin, Diisopropylhexylamin und Dimethylethanolamin, besonders bevorzugt ist Dimethylethanolamin.

In einer bevorzugten Ausführungsform des erfindungsgemäßen Verfahrens werden die isocyanatreaktiven Komponenten a2) und a3) und der Katalysator k) vorgelegt und anschließend mit dem Polyisocyanat a1) gemäß Schritt I des erfindungsgemäßen Verfahren versetzt. Der Temperaturbereich wird dabei bevorzugt zwischen 50°C und 140°C eingestellt. Der Katalysator k) kann dabei jeder der Komponenten a1), a2), oder a3) beigemischt sein oder separat zugefügt werden. Die Reaktion nach Schritt I. kann in nicht-isocyanatreaktiven Lösemitteln, so genannten Colösemitteln, durchgeführt werden, bevorzugt ist die Durchführung dieses Reaktionsschrittes I. ohne Colösemittel. Nach Vermischung der Komponenten k), a1), a2) und a3) gemäß Schritt I wird so lange gerührt, bis IR-spektroskopisch keine NCO-Gruppen mehr nachweisbar sind.

Das resultierende OH-funktionelle und NCO-gruppenfreie Polyurethan gemäß Schritt II wird anschließend in einer bevorzugten Variante in einem flüchtigen wassermischbaren Colöser mit einem Siedepunkt unter 85°C bei einem Druck von 1013 mbar wie beispielsweise Aceton gelöst und anschließend mit dem Blockieruagsmittel a4) gemischt. Alternativ kann auch zuerst das Blockierungsmittel zu dem Polyurethan aus Schritt II des erfindungsgemäßen Verfahrens zugemischt werden und dann das daraus resultierende Gemisch in dem Lösemittel gelöst werden. Der bevorzugte Lösemittelgehalt der Mischung aus Schritt II ist abhängig von deren Viskosität und liegt zwischen 0 und 60 Gew.-%, besonders bevorzugt zwischen 5 und 30 Gew.-%. Es wird eine Temperatur zwischen 0°C und 80°, bevorzugt zwischen 20 und 50°C eingestellt. Anschließend wird die Polyisocyanatkomponente a5) so zudosiert, dass eine Temperatur von 80°C nicht überschritten wird. Bevorzugt ist die Einhaltung eines Temperaturbereichs zwischen 20 und 60°C während der Zugabe und bei dem folgenden Nachrühren. Die Mischung wird gerührt, bis IR-spektroskopisch keine NCO-Gruppen mehr nachweisbar sind.

In der bevorzugten Ausführungsform werden die Säuregruppen des Polyurethan aus dem Baustein a2) anschließend ganz oder teilweise mit einer Base a6) deprotoniert, dann wird mit Wasser dispergiert.

Zur Dispergierung in Wasser wird die Polyurethan-Lösung gegebenenfalls unter starker Scherung, im Allgemeinen mit einer Rührenergie 1 W/1 bis 1000 kW/1, entweder in das Dispergierwasser eingetragen oder es wird umgekehrt das Dispergierwasser zu der Polyurethanlösungen gerührt. Bevorzugt wird das Wasser in das gelöste Polyurethan gegeben.

Nach beendeter Dispergierung gemäß Schritt VII wird ggf. vorhandenes, flüchtiges Lösemittel destillativ entfernt. Bevorzugt erfolgt die Destillation im Vakuum bei Temperaturen zwischen 20 und 70°C besonders bevorzugt bei 30 bis 50°C. Das Vakuum wird bevorzugt zwischen 50 und 500 mbar eingestellt, besonders bevorzugt zwischen 100 und 200 mbar. Es kann dabei zuerst die gewünschte Temperatur eingestellt und das zum Destillieren notwendige Vakuum angepasst werden, oder umgekehrt. In einer ganz besonders bevorzugten Verfahrensweise wird zunächst ein Vakuum zwischen 100 und 200 mbar eingestellt und die Dispersion anschließend von Raumtemperatur auf 40°C erwärmt. Der Vorteil dieser Verfahrensweise liegt im geringen Anteil des Lösemittels in der fertigen Dispersion, dieser liegt in der Regel unter 0,5 Gew.-% bezüglich der Dispersion

Es ist weiterhin möglich, jedoch nicht bevorzugt, weitere, nicht durch Destillation entfernbare Colösemittel zuzusetzen. Diese werden so eingesetzt, dass sie bezüglich der Dispersion einen Gehalt von bis zu 4, bevorzugt bis zu 2 Gew.-% bezüglich der Dispersion enthalten. Besonders bevorzugt ist die Herstellung Colösemittel-freier Dispersionen.

Zur Beschleunigung des Reaktionsschrittes I wird mindestens ein Katalysator k) ausgewählt aus der Gruppe von tertiäre Amine, Zinn-, Zink- oder Wismuthverbindungen, bevorzugt sind insbesondere Triethylamin, 1,4-Diazabicyclo-[2,2,2]-octan, Zinndioktoat und Dibutylzinndilaurat, eingesetzt. Ganz besonders bevorzugt sind Zinndioktoat und Dibutylzinndilaurat. Dieser Polyurethankatalysator k) beschleunigt die Urethanbildung zu Schritt II. Auch in EP-A 2006/005878 werden die oben genannten Katalysatoren eingesetzt. Hier werden sie jedoch als Blockierungskatalysatoren in einem späteren Schritt des Verfahrens eingesetzt.

Die so erfindungsgemäß erhältlichen selbstvernetzenden, wässrigen Dispersionen haben Feststoffgehalte von 10 bis 70 Gew.-% bevorzugt 30 bis 55 Gew.-% nicht-flüchtiger Bestandteile bezüglich der Dispersion, ermittelt durch Trocknung eines Films bei 100°C bis zur Gewichtskonstanz.

Die nach dem erfindungsgemäßen Verfahren erhältlichen Dispersionen können als freie Hydroxylgruppen enthaltende Einkomponenten-Einbrennsysteme zur Herstellung von Lacken, Farben und anderen Formulierungen verwendet werden. Dabei können die in der Beschichtungstechnologie üblichen Hilfs- und Zusatzmittel wie Pigmente, Verlaufsmittel, blasenverhindernde Zusatzmittel oder Katalysatoren mit verwendet werden. Auch eine Mischung mit anderen alkoholreaktiven Verbindungen wie z.B. Aminovernetzerharzen wie beispielsweise Melaminharzen und/oder Harnstoffharzen zur zusätzlichen Vernetzung beim Einbrennen ist möglich.

### Beispiele:

### Desmodur^{®} N 3300 :

Isocyanurat auf Basis von Hexamethylendiisocyanat, Bayer MaterialScience AG, Leverkusen, DE Die weiteren Chemikalien wurden vom Chemikalienfachhandel bezogen (Sigma-Aldrich Chemie GmbH, Taufkirchen, DE).

Sofern nicht abweichend vermerkt, beziehen sich alle Prozentangaben auf Gewichtsprozent.

Sofern nicht abweichend vermerkt, beziehen sich alle analytischen Messungen auf Temperaturen von 23°C.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgrößen wurden mittels Laserkorrellationsspektroskopie (Gerät: Malvern Zetasizer 1000, Malver Inst. Limited) bestimmt.

Die Festkörpergehalte wurden ermittelt durch Erhitzen einer ausgewogenen Probe auf 100°C. Bei Gewichtskonstanz wurde durch erneutes Auswiegen der Probe der Festkörpergehalt berechnet.

Die Kontrolle auf freie NCO-Gruppen wurde mittels IR-Spektroskopie (Bande bei 2260 cm⁻¹) durchgeführt.

### Beispiel B1): Nachstellung EP-A 1311571 B1 (DMP-blockiertes N 3300 in MPA/5N100)

Entsprechend dem Versuch B1 in EP-A 1311571 wurden 625 g Desmodur® N 3300 , 104 g 1-Methoxypropylacetat und 209 g Solventnaphtha® 100 (Shell) auf 50°C aufgeheizt. Zu der Lösung wurden 314 g 3,5-Dimethylpyrazol so zugegeben, dass die Temperatur von 65°C nicht überschritten wird. Anschließend wurde bei 50°C so lange gerührt, bis keine Isocyanatgruppen mehr nachweisbar waren (ca. eine Stunde). Die Viskosität der Lösung betrug 3910 mPas (23°C, Scherrate 186 s⁻¹).

### Beispiel B2): (analog 1) DMP-blockiertes N 3300 ohne Lösemittel)

Es wurden 625 g Desmodur® N 3300 in einer Rührapparatur auf 50°C aufgeheizt. Dann wurden 314 g 3,5-Dimethylpyrazol so zugegeben, dass die Temperatur von 65°C nicht überschritten wird. Anschließend wurde bei 65°C so lange gerührt, bis IR-spektroskopisch keine Isocyanatgruppen mehr nachweisbar waren (ca. eine Stunde). Dabei wurde die Mischung schnell sehr viskos. Bei Abkühlung auf Raumtemperatur war keine Fließfähigkeit vorhanden, auch nach Erwärmung auf 50°C war keine Abfüllung möglich.

Dieses blockierte Polyisocyanat eignet sich nicht zur Herstellung einer selbstvernetzenden Polyurethandispersion, da eine Dosierung nicht möglich ist. Die Herstellung einer entsprechenden colösemittelfreien Dispersion ist also nicht auf dem naheliegenden Weg aus dem Stand der Technik möglich, indem dem man einfach auf Colöser verzichtet.

### Beispiel B3): Versuch zur Einführung von Diisopropylamin als Blockierungsmittel entsprechend dem Verfahren B1 in EP 1311571 B1

Es wurde verfahren wie in Beispiel 1) beschrieben, jedoch wurden statt 314 g 3,5-Dimethylpyrazol 324,3 g Diisopropylamin zugesetzt.

Die Viskosität der Lösung betrug direkt nach der Herstellung 49300 mPas (23°C, Scherrate 186 s⁻¹). Innerhalb weniger Tage bildeten sich Kristalle in dem Behälter, eine Fließfähigkeit war nicht mehr vorhanden.

Durch die hohe Viskosität und die Kristallisationsneigung ist es nicht möglich, eine selbstvernetzenden Polyurethandispersion mit Diisopropylamin-blockierten Isocyanatgruppen in Analogie zu den Dimethylpyrazol-blockierten Systemen in EP-A 1311571 herzustellen.

### Beispiel D1) nicht erfindungsgemäß, Nachstellung einer Dispersion entsprechend EP-A 1311571 D7

In einer 2-Liter Rührapparatur wurden 234,8 g eines Polyesters mit einem OH-Gehalt von 3,3% und einer Säurezahl von ca. 3 mg KOH/g, bestehend aus 39,7% Neopentylglykol, 6,4% Trimethylpropan, 43,5% Tetrahydrophthalsäureanhydrid und 10,4% Adipinsäure sowie 234,8 g eines Polyesters mit einem OH-Gehalt von 2,0% und einer Säurezahl von ca. 1 mg KOH/g aus 30,4% Hexandiol-1,6, 16,9% Neopentylglykol und 52,7% Adipinsäure vorgelegt und zusammen mit 31,5 g Dimethylolpropionsäure, 28,95 g Trimethylolpropan, 69,86 g N-Methylpyrrolidon und 0,80 g Zinnoctoat auf 130°C aufgeheizt und 30 Minuten unter Rühren homogenisiert. Anschließend wurde gekühlt auf 90°C es wurden 99,4 g Isophorondiisocyanat (IPDI) unter kräftigem Rühren zugesetzt. Die Mischung wurde direkt im Anschluss auf 130°C geheizt und bei dieser Temperatur gehalten, bis IR-spektroskopisch keine Isocyanatgruppen mehr nachweisbar waren.

Anschließend wurde die Mischung abgekühlt auf 70°C, und mit 200,2 g der Lösung des blockierten Polyisocyanates aus Beispiel B1) versetzt. Nach 30 Minuten wurden 20,9 g N,N-Dimethylethanolamin zugesetzt, weitere 10 Minuten bei 70°C gerührt und dann mit 665 g entionisiertem Wasser versetzt.

Die Dispersion besaß nachfolgende Eigenschaften:

| | |
|---|---|
| Feststoffgehalt | 49,6 % |
| pH-Wert | 7,7 |
| Viskosität mPas (23°C, Scherrate 186 s⁻¹) | 343 mPas |
| Partikelgröße (Laserkorrelationsspektroskopie, LKS) | 73 nm |

### Beispiel D2) nicht erfindungsgemäß, in Anlehnung an Beispiel D1, DMP-blockierte colöserfreie Selbsternetzer-Dispersion in-situ-Blockierung mit unter Katalyse des Blockierungsschrittes, wie in EP-A 2006/005878 beschrieben

In einer 2-Liter Rührapparatur wurden 234,8 g eines Polyesters mit einem OH-Gehalt von 3,3% und einer Säurezahl von ca. 3 mg KOH/g, bestehend aus 39,7% Neopentylglykol, 6,4% Trimethylpropan, 43,5% Tetrahydrophthalsäureanhydrid und 10,4% Adipinsäure sowie 234,8 g eines Polyesters mit einem OH-Gehalt von 2,0% und einer Säurezahl von ca. 1 mg KOH/g aus 30,4% Hexandiol-1,6, 16,9% Neopentylglykol und 52,7% Adipinsäure vorgelegt und zusammen mit 31,5 g Dimethylolpropionsäure und 28,95 g Trimethylolpropan, auf 130°C aufgeheizt und 30 Minuten unter Rühren homogenisiert. Anschließend wurde gekühlt auf 90°C es wurden 99,4 g Isophorondiisocyanat (IPDI) unter kräftigem Rühren zugesetzt. Die Mischung wurde direkt im Anschluss auf 130°C geheizt und bei dieser Temperatur gehalten, bis IR-spektroskopisch keine Isocyanatgruppen mehr nachweisbar waren.

Anschließend wurde die Mischung abgekühlt auf 70°C, dann wurden 140 g Aceton zugesetzt und auf 40°C abgekühlt. Es wurden bei 40° 50,5 g 3,5-Dimethylpyrazol und 0,8 g Zinndioctoat zugesetzt, 20 Minuten nachgerührt und anschließend wurden 102,4 g Desmodur® N 3300 innerhalb von einer Stunde zudosiert, dabei lag die Temperatur zwischen 35 und 40°C. Es wurde noch eine Stunde nachgerührt, bis IR-spektroskopisch keine Isocyanatgruppen mehr nachweisbar waren. Dann wurden 20,9 g N,N-Dimethylethanolamin zugesetzt, weitere 10 Minuten bei 40°C gerührt und dann mit 789 g entionisiertem Wasser versetzt. Es bildete sich keine Dispersion sondern es setzte sich sofort ein grobteiliger Bodensatz ab. Weiteres Verdünnen mit 363 g Wasser führte auch nicht zu einer Dispergierung.

### Beispiel D3) erfindungsgemäß, wie Beispiel D2, DMP-blockierte colöserfreie Selbsternetzer-Dispersion, jedoch Herstellung unter Zugabe des Katalysators vor der Bildung des OHgruppenhaltigen Polyurethans

In einer 2-Liter Rührapparatur wurden 234,8 g eines Polyesters mit einem OH-Gehalt von 3,3% und einer Säurezahl von ca. 3 mg KOH/g, bestehend aus 39,7% Neopentylglykol, 6,4% Trimethylpropan, 43,5% Tetrahydrophthalsäureanhydrid und 10,4% Adipinsäure sowie 234,8 g eines Polyesters mit einem OH-Gehalt von 2,0% und einer Säurezahl von ca. 1 mg KOH/g aus 30,4% Hexandiol-1,6, 16,9% Neopentylglykol und 52,7% Adipinsäure vorgelegt und zusammen mit 31,5 g Dimethylolpropionsäure, 28,95 g Trimethylolpropan und 0,8 g Zinndioctoat auf 130°C aufgeheizt und 30 Minuten unter Rühren homogenisiert. Anschließend wurde gekühlt auf 90°C es wurden 99,4 g Isophorondiisocyanat (IPDI) unter kräftigem Rühren zugesetzt. Die Mischung wurde direkt im Anschluss auf 130°C geheizt und bei dieser Temperatur gehalten, bis IR-spektroskopisch keine Isocyanatgruppen mehr nachweisbar waren.

Anschließend wurde die Mischung abgekühlt auf 70°C, dann wurden 140 g Aceton zugesetzt und auf 40°C abgekühlt. Es wurden bei 40° 50,5 g 3,5-Dimethylpyrazol zugesetzt, 20 Minuten nachgerührt und anschließend wurden 102,4 g Desmodur® N 3300 innerhalb von einer Stunde zudosiert, dabei lag die Temperatur zwischen 35 und 40°C. Es wurde noch eine Stunde nachgerührt, bis IR-spektroskopisch keine Isocyanatgruppen mehr nachweisbar waren. Dann wurden 20,9 g N,N-Dimethylethanolamin zugesetzt, weitere 10 Minuten bei 40°C gerührt und dann mit 789 g entionisiertem Wasser versetzt. Es bildete sich eine feinteilige Dispersion aus der das Aceton bei 40°C im Vakuum (120 mbar) über ca. 2 Stunden abdestilliert wurde.

Die Dispersion besaß nachfolgende Eigenschaften:

| | |
|---|---|
| Feststoffgehalt | 49,0 % |
| pH-Wert | 8,0 |
| Viskosität mPas (23°C, Scherrate 186 s⁻¹) | 977 mPas |
| Partikelgröße (Laserkorrelationsspektroskopie, LKS) | 103 nm |

### Beispiel D4) erfindungsgemäß, wie Beispiel D3 jedoch mit anderem Blockierunesmittel: Butanonoxim-blockierte colöserfreie Selbsternetzer-Dispersion,

In einer 2-Liter Rührapparatur wurden 234,8 g eines Polyesters mit einem OH-Gehalt von 3,3% und einer Säurezahl von ca. 3 mg KOH/g, bestehend aus 39,7% Neopentylglykol, 6,4% Trimethylpropan, 43,5% Tetrahydrophthalsäureanhydrid und 10,4% Adipinsäure sowie 234,8 g eines Polyesters mit einem OH-Gehalt von 2,0% und einer Säurezahl von ca. 1 mg KOH/g aus 30,4% Hexandiol-1,6, 16,9% Neopentylglykol und 52,7% Adipinsäure vorgelegt und zusammen mit 31,5 g Dimethylolpropionsäure, 28,95 g Trimethylolpropan und 0,8 g Zinndioctoat auf 130°C aufgeheizt und 30 Minuten unter Rühren homogenisiert. Anschließend wurde gekühlt auf 90°C es wurden 99,4 g Isophorondiisocyanat (IPDI) unter kräftigem Rühren zugesetzt. Die Mischung wurde direkt im Anschluss auf 130°C geheizt und bei dieser Temperatur gehalten, bis IR-spektroskopisch keine Isocyanatgruppen mehr nachweisbar waren.

Anschließend wurde die Mischung abgekühlt auf 70°C, dann wurden 140 g Aceton zugesetzt und auf 40°C abgekühlt. Es wurden bei 40° 45,7 g Butanonoxim zugesetzt, 20 Minuten nachgerührt und anschließend wurden 102,4 g Desmodur® N 3300 innerhalb von einer Stunde zudosiert, dabei lag die Temperatur zwischen 35 und 40°C. Es wurde noch eine Stunde nachgerührt, bis IR-spektroskopisch keine Isocyanatgruppen mehr nachweisbar waren. Dann wurden 20,9 g N,N-Dimethylethanolamin zugesetzt, weitere 10 Minuten bei 40°C gerührt und dann mit 975 g entionisiertem Wasser versetzt. Es bildete sich eine feinteilige Dispersion aus der das Aceton bei 40°C im Vakuum (120 mbar) über ca. 2 Stunden abdestilliert wurde.

Die Dispersion besaß nachfolgende Eigenschaften:

| | |
|---|---|
| Feststoffgehalt | 43,9 % |
| pH-Wert | 8,1 |
| Viskosität mPas (23°C, Scherrate 186 s⁻¹) | 387 mPas |
| Partikelgröße (Iaserkorrelationsspektroskopie, LKS) | 111 nm |

### Beispiel D5) erfindungsgemäß, wie Beispiel D3 jedoch mit anderem Blockierungsmittel: Diisopropylamin-blockierte colöserfreie Selbsternetzer-Dispersion,

In einer 2-Liter Rührapparatur wurden 234,8 g eines Polyesters mit einem OH-Gehalt von 3,3% und einer Säurezahl von ca. 3 mg KOH/g, bestehend aus 39,7% Neopentylglykol, 6,4% Trimethylpropan, 43.5% Tetrahydrophthalsäureanhydrid und 10,4% Adipinsäure sowie 234,8 g eines Polyesters mit einem OH-Gehalt von 2,0% und einer Säurezahl von ca. 1 mg KOH/g aus 30,4% Hexandiol-1,6, 16,9% Neopentylglykol und 52,7% Adipinsäure vorgelegt und zusammen mit 31,5 g Dimethylolpropionsäure, 28,95 g Trimethylolpropan und 0,8 g Zinndioctoat auf 130°C aufgeheizt und 30 Minuten unter Rühren homogenisiert. Anschließend wurde gekühlt auf 90°C es wurden 99,4 g Isophorondiisocyanat (IPDI) unter kräftigem Rühren zugesetzt. Die Mischung wurde direkt im Anschluss auf 130°C geheizt und bei dieser Temperatur gehalten, bis IR-spektroskopisch keine Isocyanatgruppen mehr nachweisbar waren.

Anschließend wurde die Mischung abgekühlt auf 70°C, dann wurden 140 g Aceton zugesetzt und auf 40°C abgekühlt. Es wurden bei 40° 45,7 g Butanonoxim zugesetzt, 20 Minuten nachgerührt und anschließend wurden 102,4 g Desmodur® N 3300 innerhalb von einer Stunde zudosiert, dabei lag die Temperatur zwischen 35 und 40°C. Es wurde noch eine Stunde nachgerührt, bis IR-spektroskopisch keine Isocyanatgruppen mehr nachweisbar waren. Dann wurden 20,9 g N,N-Dimethylethanolamin zugesetzt, weitere 10 Minuten bei 40°C gerührt und dann mit 975 g entionisiertem Wasser versetzt. Es bildete sich eine feinteilige Dispersion aus der das Aceton bei 40°C im Vakuum (120 mbar) über ca. 2 Stunden abdestilliert wurde.

Die Dispersion besaß nachfolgende Eigenschaften:

| | |
|---|---|
| Feststoffgehalt | 48,9 % |
| pH-Wert | 8,2 |
| Viskosität mPas (23°C, Scherrate 186 s⁻¹) | 1650 mPas |
| Partikelgröße (Laserkorrelationsspektroskopie, LKS) | 113 nm |

Die anwendungstechnischen Eigenschaften der erfindungsgemäßen Dispersionen gehen aus Tabelle 1 hervor.

Es wurden Klarlacke nachfolgender Zusammensetzung hergestellt. Aus den Klarlacken wurden Filme hergestellt, 10 Min. bei Raumtemperatur getrocknet und anschließend 30 Min. bei 140°C bzw. 160°C eingebrannt. Die erhaltenen Filme wurden anwendungstechnisch beurteilt.

Die Messung der Pendelhärten erfolgte nach der Methode von König entsprechend DIN 53157. Die Anlösbarkeiten werden beurteilt nach jeweils 1 Minute Einwirkungszeit des Lösemittels. Reihenfolge der Lösungsmittel: Xylol / Methoxypropylacetat / Ethylacetat / Aceton Beurteilung: 0 sehr gut bis 5 schlecht

**Tabelle 1**

| **Dispersion aus Beispiel Nr.** | **D1 (Vergleich)** | **D3** | **D4** | **D5** |
|---|---|---|---|---|
| Produkteinwaagen der Dispersion [g] | 150,0 | 150,0 | 150,0 | 150,0 |
| Additol XW 395 [g] | 1,2 | 1,2 | 1,2 | 1,2 |
| N,N-Dimethylethanolamin, 10%ig in Wasser [g] | 1,8 | 0,7 | - | - |
| dest. Wasser [g] | 12,0 | 17,0 | 5,0 | 15,0 |
| Gesamt [g] | 165,0 | 168,9 | 156,2 | 166,2 |
| Festkörper [%] | 45,1 | 43,5 | 42,2 | 44,1 |
| pH-Wert | 8,3 | 8,3 | 8,3 | 8,3 |
| Auslaufzeit ISO-Becher 5 mm [s] | 37 | 41 | 30 | 40 |
| Einbrennbedingung: 10 Min. RT+ 30 Min. 140°C | | | | |
| Pendelhärte [s] | 21 | 20 | 14 | 18 |
| Anlösbarkeit 1 min. (0-5) | 4444 | 4444 | 4444 | 4444 |
| Aussehen des Lackfilms⁽¹⁾ | i.O. | i.O. | i.O. | i.O. |
| Einbrennbedingung: 10 Min. RT + 30 Min. 160°C | | | | |
| Pendelhärte [s] | 21 | 20 | 18 | 16 |
| Anlösbarkeit 1 Min. (0-5) | 4444 | 4444 | 4444 | 4444 |
| Aussehen des Lackfilms⁽¹⁾ | i.O. | i.O. | i.O. | i.O. |

| | | | | |
|---|---|---|---|---|
| (1) i.O. = in Ordnung, fehlerfrei | | | | |

Die nach dem erfindungsgemäßen Verfahren hergestellten Dispersionen weisen die gewünschten Anforderungen hinsichtlich Filmbildung, und die Werte für die Anlösbarkeiten bzw. Pendelhärten der ausgehärteten Filme sind in Ordnung. Nachteile verglichen zu dem lösemittelhaltigen Vergleichbeispiel aus D1 sind bei den erfindungsgemäßen Dispersionen nicht vorhanden.

## Patentansprüche

1. Ein Verfahren zur Herstellung von selbstvernetzenden, wässrigen Polyurethandispersionen umfassend folgenden Schritte:
I. Umsatz eines
a1) Polyisocyanates
mit einem Gemisch aus
a2) mindestens eine isocyanatreaktive Gruppe enthaltendem, anionischem Hydrophilierungsmittel mit einer mittleren OH-Funktionalität von ≥ 1 und
a3) mindestens einer Polyolkomponente mit einer mittleren OH-Funktionalität von > 1,
wobei entweder das Gemisch aus a2) und a3) oder die Komponente a1)
k) mindestens einen Katalysator enthält,
II. Erhalt eines OH-funktionellem und NCO-gruppenfreiem Polyurethan aus Schritt I, welches anschließend
III. a4) mit einem reaktiven Blockierungsmittel für Isocyanatgruppen vermischt wird,
IV. anschließender Umsatz dieses Gemisch aus Schritt III mit
a5) einem oder mehreren Polyisocyanaten ausgewählt aus der Gruppe von a1), wobei diese Polyisocyanate gleich oder verschieden von a1) sind und anschließender
V. Erhalt einer physikalischen Mischung aus OH-funktionellen, NCO-gruppenfreien Polyurethan und blockiertem Polyisocyanat aus Schritt IV, bei dem anschließend entweder
VI. die Säuregruppen des OH-funktionellem Polyurethans durch Zugabe a6) eines Neutralisationsmittels ganz oder teilweise deprotoniert werden
VII. und das aus diesem Schritt VI. erhaltene Polyurethan in Wasser dispergiert wird oder Schritt VII vor Schritt VI erfolgt.

2. Verfahren nach Anspruch 1, wobei Schritt VI vor Schritt VII erfolgt.

3. Verfahren nach Anspruch 1, wobei Schritt VII vor Schritt VI erfolgt.

4. Verfahren nach einem der Ansprüche 1 bis 3, wobei als Blockierungsmittel gemäß Schritt III Verbindungen ausgewählt aus der Gruppe von Butanonoxim, Diisopropylamin und 3,5-Dimethylpyrazol eingesetzt werden.

5. Das Verfahren nach einem der Ansprüche 1 bis 4, wobei bis zu 30 Gew.-% bezogen auf das Polyurethan aus Schritt II. an einem Lösungsmittel oder Lösungsmittelgemisch ausgewählt aus der Gruppe von Aceton, Methylethylketon und Tetrahydrofuran und deren Mischungen nach Schritt II. oder Schritt III, eingesetzt werden, das anschließend nach Schritt VII destillativ entfernt wird.

## Claims

1. A process for preparing self-crosslinking aqueous polyurethane dispersions, comprising the following steps:
I. reacting a
a1) polyisocyanate
with a mixture of
a2) anionic hydrophilicizing agent containing at least one isocyanate-reactive group and having an average OH functionality of ≥ 1 and
a3) at least one polyol component having an average OH functionality of > 1,
either the mixture of a2) and a3) or component a1) comprising
k) at least one catalyst,
II. obtaining an OH-functional and NCO-free polyurethane from step I, the polyurethane subsequently being mixed
III. a4) with a reactive blocking agent for isocyanate groups,
IV. subsequently reacting this mixture from step III with
a5) one or more polyisocyanates selected from the group of a1), these polyisocyanates being identical to or different from a1), and subsequently
V. obtaining a physical mixture of OH-functional, NCO-free polyurethane and blocked polyisocyanate from step IV, wherein subsequently either
VI. the acid groups of the OH-functional polyurethane are subjected to total or partial deprotonation by addition of
a6) a neutralizing agent
VII. and the polyurethane obtained from this step VI. is dispersed in water or step VII takes place before step VI.

2. Process according to Claim 1, step VI taking place before step VII.

3. Process according to Claim 1, step VII taking place before step VI.

4. Process according any one of Claims 1 to 3, wherein the blocking agents used in step III are compounds selected from the group consisting of butanone oxime, diisopropylamine and 3,5-dimethylpyrazole.

5. The process according any one of Claims 1 to 4, wherein up to 30% by weight, based on the polyurethane from step II., of a solvent or solvent mixture selected from the group consisting of acetone, methyl ethyl ketone and tetrahydrofuran and mixtures thereof is used after step II. or step III., and is subsequently removed by distillation after step VII.

## Revendications

1. Procédé pour la préparation de dispersions aqueuses de polyuréthanne autoréticulables, comprenant les étapes suivantes :
I. mise en réaction d'un
a1) polyisocyanate
avec un mélange
a2) d'un agent d'hydrophilie anionique, comportant au moins un groupe réactif avec un isocyanate, ayant une fonctionnalité OH moyenne de ≥ 1 et
a3) d'au moins un composant polyol ayant une fonctionnalité OH moyenne de > 1,
soit le mélange de a2) et a3), soit le composant a1)
k) contenant au moins un catalyseur,
II. obtention d'un polyuréthanne à fonctionnalité OH et exempt de groupes NCO, provenant de l'étape I, qui ensuite
III. a4) est mélangé avec un agent de blocage réactif pour groupes isocyanate,
IV. mise en réaction subséquente de ce mélange provenant de l'étape III avec
a5) un ou plusieurs polyisocyanates choisis dans le groupe de a1), ces polyisocyanates étant identiques à a1) ou différents de ceux-ci, en
V. obtention subséquente d'un mélange physique de polyuréthanne à fonctionnalité OH, exempt de groupes NCO, et de polyisocyanate bloqué provenant de l'étape IV, dans lequel ensuite soit
VI. les groupes acides du polyuréthanne à fonctionnalité OH sont partiellement ou totalement déprotonés
a6) par addition d'un agent de neutralisation
VII. et on disperse dans l'eau le polyuréthanne obtenu à partir de cette étape VI. ou on effectue l'étape VII avant l'étape VI.

2. Procédé selon la revendication 1, dans lequel on effectue l'étape VI avant l'étape VII.

3. Procédé selon la revendication 1, dans lequel on effectue l'étape VII avant l'étape VI.

4. Procédé selon l'une quelconque des revendications 1 à 3, dans lequel comme agent de blocage selon l'étape III on utilise des composés choisis dans le groupe constitué par la butanonoxime, la diisopropylamine et le 3,5-diméthylpyrazole.

5. Procédé selon l'une quelconque des revendications 1 à 4, dans lequel après l'étape II ou III on utilise jusqu'à 30 % en poids, par rapport au polyuréthanne provenant de l'étape II, d'un solvant ou mélange de solvants choisi dans le groupe constitué par l'acétone, la méthyléthylcétone et le tétrahydrofuranne et des mélanges de ceux-ci, qui est ensuite éliminé par distillation après l'étape VII.
